# EUROPEAN PATENT APPLICATION

(11) **EP 3 926 897 A1**
(43) Date of publication of application: **22.12.2021**
(21) Application number: 21179472.2
(22) Date of filing: 15.06.2021
(51) Int. Cl.: H04L 12/58, H04L 9/08, H04L 29/06, H04L 9/14, H04L 9/30, H04L 9/32

(54) **EMAIL ENCRYPTION SYSTEM**

(30) Priority: 15.06.2020 FI 20205627
(71) Applicant: IPRA Technologies Ltd OY, 53100 Lappeenranta (FI)
(72) Inventor: MUNDE, Misa, 53100 Lappeenranta (FI); VALJAKKA, Lauri, 53100 Lappeenranta (FI)
(74) Representative: Laine IP Oy

(57) **Abstract**

According to an example aspect of the present invention, there is provided a method and a system for using symmetric and asymmetric cryptography to encrypt emails and attachments thereof as well as digitally sign the resulting cryptographic metadata.

## Description

### FIELD

This disclosure provides an email encryption solution, for use in particular in the field of cryptographic applications. More specifically, the present disclosure provides a method and system for using symmetric and asymmetric cryptography to encrypt emails and email attachments and digitally sign the resulting metadata.

### BACKGROUND

Email is a critical technology used daily by billions of people worldwide to transmit and receive electronic messages. Most email systems utilize the Simple Mail Transfer Protocol, SMTP, and a message as defined by RFC 5322. However, these formats are generally not encrypted, leading to a need for encryption when sensitive data is being shared between parties. As a result, many organizations have prohibited the use of email and have decided to rely on alternative systems when communicating confidential information. Secure alternative systems are often less efficient and user-friendly than email so confidential information tends to end up in email systems in spite of prohibitions.

Typical email encryption systems have several drawbacks the present disclosure aims to address. First, in typical systems, not all of the email data is digitally signed by the sender, which potentially allows tampering. Second, the encryption metadata is sent in the header or in the message body, which is problematic because some email clients are not able to handle such non-standard data in those fields and may inadvertently designate the encrypted message as spam or delete the encryption metadata altogether. Finally, the encryption schemes are often static, which hampers the introduction of new features into the encryption system.

The presently disclosed system solves the above-mentioned problems by the use of a hybrid cryptosystem and provision of a digital signature, as laid out in the following disclosure.

### SUMMARY OF THE INVENTION

The invention is defined by the features of the independent claims. Some specific embodiments are defined in the dependent claims.

According to a first aspect of the present invention, there is provided a method comprising using a computer program application to
- generate a symmetric encryption key,
- generate a shared secret corresponding to the recipient and a sender for each recipient using a public key of at least one recipient email address as well as a private key of the sender of the email message,
- for each recipient, symmetrically encrypt the symmetric encryption key using a recipient initialization vector and the generated shared secret corresponding to that recipient and the sender,
- generate a metadata attachment comprising recipient information related to the at least one recipient,
- generate a digital signature of the metadata attachment using the private key of the sender,
- using the symmetric encryption key and a message body initialization vector, generate an encrypted message body attachment comprising the message body in encrypted form, and
- generate the encrypted email message, said encrypted email comprising
   - a public message header comprising the at least one recipient address,
   - the metadata attachment,
   - the encrypted message body attachment, and
   - a public message body comprising at least the signature of the metadata attachment.

According to a second aspect of the present invention, there is provided an apparatus comprising at least one processing core, at least one memory including computer program code, the at least one memory and the computer program code being configured to, with the at least one processing core, cause the apparatus at least to perform a method in accordance with the first aspect of the present invention.

According to a third aspect of the present invention, there is provided a system comprised of a first apparatus in accordance with the second aspect and a second apparatus, wherein the second apparatus comprises at least one processing core and at least one memory including computer program code wherein the at least one memory and the computer program code are configured to, with the at least one processing core, cause the second apparatus to at least perform, responsive to a query from the first apparatus, a determination if a given email address of an email recipient is within at least one database, and in the event of a positive result of the determination, to return to the first apparatus at least one public key and key identifier corresponding to the given email address of the email recipient.

Various embodiments of first, second or third aspect may comprise at least one feature from the following bulleted list:
- generating at least one encrypted attachment file from at least one unencrypted attachment file,
- wherein the encrypted email message further comprises the at least one encrypted attachment file and the public message body further comprises the at least one encrypted attachment file signature,
- using the sender's private key and the sender's public key to generate a shared secret for the sender alone,
- symmetrically encrypting the symmetric encryption key using a initialization vector and the generated shared secret corresponding to the sender's private key and the sender's public key,
- including the sender information in the metadata attachment,
- wherein elliptic curve cryptography is used to generate the shared secrets,
- wherein elliptic curve cryptography is used to generate the digital signature of the metadata attachment file,
- wherein a key derivation function is used on any of the shared secrets when encrypting at least one of: the symmetric encryption key, the message body attachment,
- wherein the metadata attachment comprises sender information, said information comprising the sender's email adddress, key management domain, sender key pair identifer, the encrypted symmetric encryption key and the corresponding sender initialization vector,
- wherein the metadata attachment comprises the email subject which has been encrypted using the symmetric encryption key, the initialization vector corresponding to the encrypted email subject, and the message body attachment encryption initialization vector,
- wherein the ECC algorithm variant to be used may be ECDH-512 or ECMQV-512, both DH group 21
- wherein the ECC key length is 512 bits
- wherein the signature generation and verification algorithm is SHA2-512 with ECDSA
- wherein the DRM version defines the algorithms and key lengths for both, the clients and the backend,
- wherein the curve may be curve25591, which is one of the fastest known curves,
- wherein the AES algorithm variant to be used is AES-GCM
- The GCM salt to be used is 96 bits
- wherein the AES key used is 256 bits long.

### BRIEF DESCRIPTION OF THE DRAWINGS

FIGURE 1 illustrates a schematic view of an exemplary process of generating encrypted email using a computer program application in accordance with at least some embodiments of the present invention;
FIGURE 2 illustrates a schematic view of an exemplary process of generating encrypted email using a computer program application in accordance with at least some embodiments of the present invention;
FIGURE 3 illustrates a schematic view of an exemplary encrypted email generated in accordance with at least some embodiments of the present invention;
FIGURE 4 illustrates a schematic view of an exemplary process of generating encrypted email using a computer program application in accordance with at least some embodiments of the present invention; and
FIGURE 5 is a flow graph illustrating at least one method usable with the embodiments of the present invention.

### EMBODIMENTS

In this disclosure, a solution is provided wherein emails may be encrypted using a hybrid cryptosystem, wherein the relevant cryptographic metadata is digitally signed and presented to the recipient(s) for verification.

In the context of this disclosure, reference is made to: a sender of email, recipients of email. A sender is the party who wishes to initiate the sending of an email, whereas a recipient is a party being in possession of an email address wherein an email may be received. An email may have several recipients.

In the context of this disclosure, reference is made to email, e-mail, electronic mail. This is intended to refer to a messaging protocol and/or system consistent with at least one of the following: Simple Mail Transfer Protocol, SMTP, RFC 5322, RFC 2045-2049 (Multipurpose internet mail extensions), Microsoft Exchange email standards.

In the context of this disclosure, reference is made to an email message body. This is intended to refer to a textual or graphical message the sender intends to transmit to the at least one recipient. Said message may be comprised in text or Hypertext Transfer Protocol, HTTP. When referring to the plain text form of the email, the email body or any part of the email, what is generally meant is the unencrypted form of that entity.

In the context of this disclosure, reference is made to attachments, also known as attachment files. Attachment files are additional files appended to the email, such as image files, portable document files, PDF, or any other electronic files. Within this disclosure, attachment may mean both attachments, which are the files the sender would like to send, and attachment files, which are the actual files attached to the visible message body of the encrypted email.

The present disclosure utilizes cryptographic methods. Both symmetric and asymmetric cryptography may be used, resulting in a hybrid cryptosystem.

Symmetric encryption typically means using a symmetric encryption algorithm, wherein the same key is used for both encryption and decryption of either a stream of information or selected blocks of information.

Initialization vectors, IV or iv, may be used as part of cryptographic methods in order to add randomness to the input data. An initialization vector may be a random or pseudo-random fixed size input. The length of the IV depends on the cryptographic scheme being used. Generally, the IV is used with other elements such as the plaintext to be encrypted or encryption keys to generate encrypted elements.

Asymmetric encryption, also known as public-key cryptography, typically uses key pairs such as a public key (for distribution) and a private key (to be kept secret). For example, each user may have one or more key pairs. In a public-key system, the public key is usable by any party to encrypt information, but the information can be decrypted only by using the corresponding private key. Two parties may generate a so-called shared secret if each party has access to the other's public key and their own private key.

A key pair identifier or key identifier may be used to disclose which key pair the user is using. This is especially beneficial in applications where the user may change key pairs periodically or where the user may have multiple key pairs.

Elliptic curves, also known as just curves, may be used in cryptographic systems. Elliptic curve cryptography relies on the "elliptic curve discrete logarithm problem" (ECDLP), which means that it is very difficult to find the discrete logarithm of a random elliptic curve element with respect to a publicly known base point. Therefore, users of the scheme may agree to use a certain common curve, such as the named curves or standard curves, for example National Institute of Standards and Technology, NIST has published standard curves for US government use. Elliptic curve cryptography is beneficial to use as it is more secure and it typically has a smaller key size (which reduces storage and transmission requirements) than other methods, for example RSA, Rivest-Shamir-Adleman.

Specific cryptographic methods usable with the present disclosure may comprise at least public-key cryptography using Elliptic Curve Cryptography (ECC), symmetric-key encryption using Advanced Encryption Standard (AES) algorithm. In at least some embodiments, the emails are end-to end encrypted using at least one of a shared secret generated via Elliptic-curve Diffie-Hellman (ECDH), AES-GCM (Galois/Counter Mode) which provides data authenticity/integrity and confidentiality. In at least some embodiments, Elliptic Curve Digital Signature Algorithm (ECDSA) is used to verify the sender by digitally signing the hash of the sender's public key.

Exemplary algorithms and curve of at least some embodiments are listed below in the non-ordered bulleted list:
- A usable symmetric encryption algorithm is AES256-GCM which provides proof of data integrity and confidentiality
- A usable public-key cryptography scheme uses EC, elliptic cryptography, keys. The used cryptography schemes may be ECDH, Elliptic Curve Diffie-Hellman, for shared secret generation between users and ECDSA signature to validate sender authenticity.
- The default EC curve may be secp256r1 offering 128 bits of security.
- The used signature algorithm may be SHA2-512 with ECDSA
- The used hash algorithm may be SHA2-512
- Messages and attachments may be also stored locally encrypted
- The sensitive message-related metadata may be also encrypted, such as the names of the attachments, the subject of the email, etc. and only the information retrieved from the encrypted container is regarded as trusted.

In another exemplary embodiment, the encryption details are as follows:
- The ECC algorithm variant to be used may be ECDH groups 19-21
- The ECC default key length is 256 or alternatively 512 bits
- The signature generation and verification algorithm is SHA2-512 with ECDSA
- The DRM version defines the algorithms and key lengths for both, the clients and the backend,
- the curve may be curve25591, which is one of the fastest known curves,
- The AES algorithm variant to be used is AES-GCM
- The GCM salt to be used is 96 bits
- The AES key used is 256 bits long.

In a further exemplary embodiment, the encryption may utilize at least one of the following: Diffie-Hellman group 19 - 256 bit elliptic curve, Diffie-Hellman group 20 - 384 bit elliptic curve, Diffie-Hellman group 21 - 521 bit elliptic curve - Next Generation Encryption.

When sending encrypted email, the main process may comprise acquiring the recipients' public EC keys from the backend by using a web API and using these keys and encryption such as AES 256-bit encryption to encrypt the whole email message including attachments.

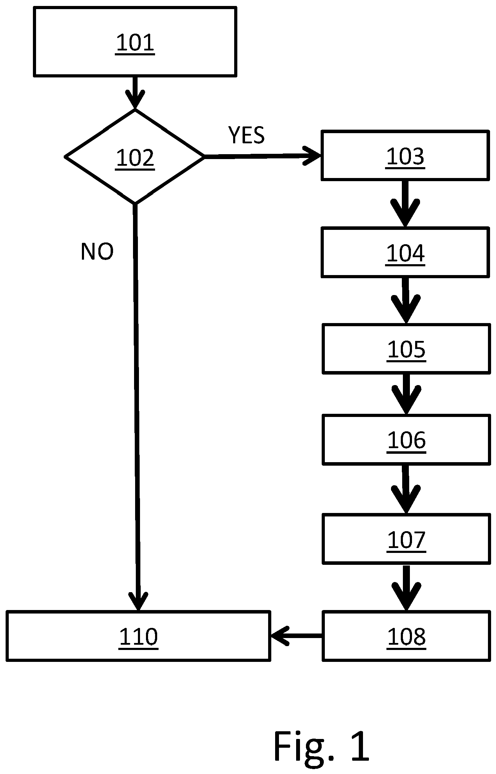

In FIGURE 1, an exemplary process of generating encrypted email using a computer program application, supported by at least some embodiments of the present disclosure, is shown as follows:

In step 101, a user creates a new email message and inputs the email addresses of the intended recipients of the email message. This user will be referred to as the sender within this process.

In step 102, a determination, also known as a check, is performed, for example by a second computer program application responsive to a query received from a first computer program application, for example by a backend using a web API, application programming interface, that the recipients are users of the encrypted email system. In case all of the recipients are users of the encrypted email service, their public keys are fetched from the key server and the process moves on to step 103. In case some or all of the recipients are not users, a warning notification message may be shown. The user has the possibility to send the email without encryption or to generate and send the email encrypted to a subset of the recipients. In at least some of these cases, the process moves to step 110 and terminates.

In step 103, an encryption key is generated. Using the generated encryption key, the body of the email composed by the user and the possible attachments of the email are compressed and then encrypted into separate encrypted email attachments, preferably using different initialization vectors for the body of email message and each of the attachments of the email. The encryption may be performed using AES256-GCM encryption, for example.

In step 104, for each recipient and the sender alone, a shared secret is generated using the sender's private key and the recipient's public keys which were previously retrieved. In the case of the sender alone, the sender's private and public key may be optionally used to generate a secret for the sender so that the sender may later decrypt the encrypt the encrypted message.

In step 105, for each recipient and the sender alone, the generated encryption key is symmetrically encrypted using a second encryption key which is generated by using:
- the shared secret corresponding to the recipient and sender (or the sender alone),
- an initialization vector.
For example, ECDH, Elliptic-curve Diffie-Hellman, may be used to generate the second encryption key when using receiver's public key and the sender's private EC, elliptic cryptography, keys. In this step, optionally a key derivation function may be used on at least the shared secret as discussed later within this disclosure.

In step 106, a metadata attachment file is created, said file comprising:
- sender information, which comprises the sender email address, the domain managing the sender's key pair, the sender's key pair identifier, the encrypted email encryption key and the encrypted email encryption key initialization vector,
- recipient information for each recipient, where said information comprises the recipient email address, the domain managing the recipient's key pair, the recipient's key pair identifier, the encrypted email encryption key and the encrypted email encryption key initialization vector,
- message information, which comprises the message subject in encrypted form, the message subject encryption initialization vector, and the message body attachment encryption initialization vector, and
- optionally details relating to the cryptographic implementation such as the version number of the cryptographic scheme.

In step 107, a digital signature is created using the sender's private key to generate a digital signature of one or more components of the email, for example of the metadata attachment. In an exemplary embodiment, SHA2-512 with ECDSAis used to verify the integrity of the signed files, which have been digitally signed by the sender's private key. For example the data to be signed may be hashed and then a signature is generated based on the hash (a so-called hash and signature procedure).

In step 108, The encrypted email is generated, comprising:
- an unencrypted public email body which states in plaintext that this email is encrypted email and which comprises the digital signature,
- at least one metadata attachment, which contains the information about the email and instructions for the encrypted email clients to decrypt the email, more specifically the above-mentioned sender information, recipient information and message information,
- at least one attachment containing the user's composed email (message body) in encrypted form, and
- optionally any attachments (attachment files) included in the email in encrypted form.

In step 110, the encrypted email is ready to be sent with the attachments generated during steps 101-108.

An exemplary process of decrypting email generated by at least some embodiments of the present disclosure using a computer program application is as follows:
1. The encrypted email message is received and a determination is performed to determine if the message is encrypted.
2. If the message is encrypted, the metadata attachment and the message body attachment are retrieved.
3. The metadata attachment is parsed to determine at least the following information:
   - sender information, comprising the sender address and the sender key pair identifier,
   - recipient information, comprising the recipient address and the recipient key pair identifier,
4. Based on the recipient information, it is determined if the user of the mail client is a recipient of the message and if so, what key pair has been used by the sender.
5. Based on the sender information, the sender's public key is retrieved.
6. The message body is parsed for the sender's signature and using sender's public key, the signature of the metadata attachment is verified. For example, the signature verification may comprise verifying a byte data array of the encryption metadata file (converted into base64) signature generated using an Elliptic Curve Digital Signature Algorithm.
7. Using the sender's public key and the recipient's private key, a shared secret is generated.
8. Using the shared secret and the initialization vector from the recipient information which corresponds to the current recipient, the symmetric encryption key used to encrypt the email message body and the subject is decrypted.
8. The decrypted symmetric encryption key is used to decrypt the subject, and the message body attachment of the email. The recipient can now enjoy the decrypted email, i.e. the email is now in plaintext form. Any encrypted attachments present may be decrypted as well.

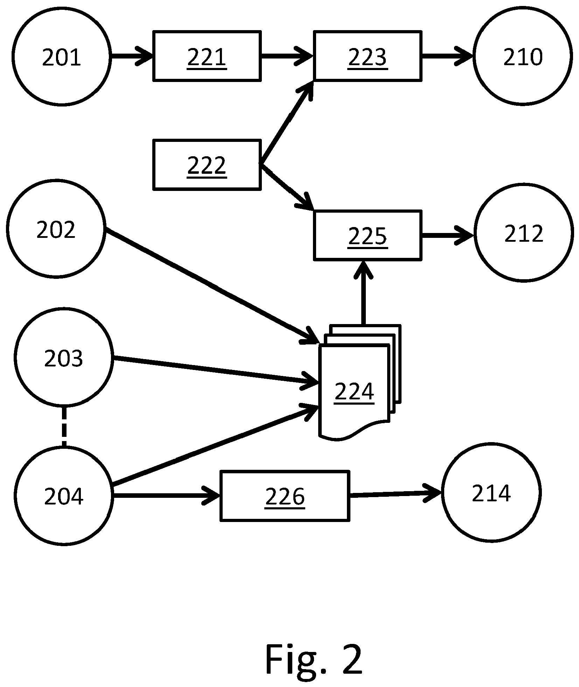

FIGURE 2 illustrates a second exemplary process for generating encrypted email. In figure 2, element 201 is the plain text form of the email message, element 202 is the recipient's public key, 203 is the sender's public key and 204 is the sender's private key. Keys 203 and 204 are a key pair as indicated by the connecting dotted line.

In step 221, the plain text 201 is compressed using any suitable method, for example gzip. In step 222, an encryption key is generated. In step 223, the compressed plain text is encrypted, resulting in encrypted plain text 210, which may also be called the secured message body attachment, encrypted message body attachment.

In step 224, the recipient's public key 202 and the sender's private key 204 are used to create a shared secret for each recipient and sender pair and, in the case of the sender alone, the sender's public key 203 is also used with the private key 204 to create a shared secret for the sender alone, so that the sender may later decrypt the sent message.

In step 225, the encryption key generated in step 222 is encrypted with each shared secret generated in step 224, optionally using different initialization vectors for each encryption. Optionally, a key derivation function may also be used for the shared secret in this step as discussed elsewhere within this disclosure. The resulting encrypted encryption keys along with the corresponding initialization vectors are stored in the metadata attachment 212.

Further, in step 226, the sender's private key 204 is used in step 226 to digitally sign at least one of: metadata attachment 212, a portion of metadata attachment 212, the sender's information, a portion of the sender sender's information such as the sender's email address. The digital signature is then element 214 and may be added to the public message body, for example. The process steps shown with respect to Figure 2 may be performed in any logical order, as evidenced by the figure. For example, the encryption key may be encrypted first and then the plaintext message may be encrypted using the encryption key. The method steps and work products shown in Figure 1 and Figure 2 as well as Figures 4 and 5 may be used interchangeably in all embodiments of the present disclosure.

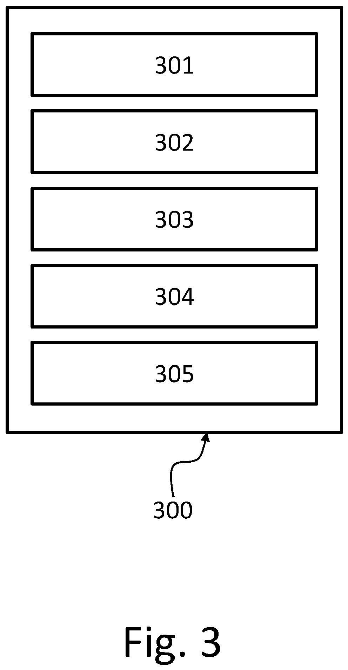

FIGURE 3 illustrates an exemplary encrypted email structure in accordance with at least some embodiments of the present invention. Email 300 is an encrypted email comprising public message header 301, visible message body 302, the first message attachment 303, the second message attachment 304 and the third message attachment 305. In this embodiment the third message attachment 305 corresponds to an attachment sent by the user and is therefore optional. If there are several attachments the user is desirous to send, there may be further attachments such as attachments 306, 307, et cetera, each corresponding to the user attachments. It is understood that the ordinal numbers "first", "second" et cetera, have been provided only for the convenience of the reader to illustrate the logical structure of the methods disclosed herein. Therefore, the elements comprising the email may be generated or ordered as part the message in any order.

In at least some embodiments, the public message header 301 is a typical email header in accordance with commonly used standards, e.g. RFC 5322, RFC 2047, RFC 3864, Microsoft Exchange protocol. It may comprise fields such as: the sender's email address, the recipient's email address, the date and time the message was written, subject, content-type.

In at least some embodiments, the visible message body 302 comprises a message indicating that the actual content is secured. In at least some further embodiments, the message body may comprise a digital signature as generated in the methods previously disclosed herein. In a further exemplary embodiment, the message body may comprise a digital signature of the metadata attachment file, generated using the data content of metadata attachment file and the sender's private key.

Benefits of signing metadata attachment file in the above manner include the ability to verify that the metadata attachment and any contents therein have not been tampered with. As the sender information, e.g. the sender's email address is part of said metadata attachment, this allows to verify the sender of the email as well by using the sender's public key (available publicly). The same applies to all contents of the metadata file, including all of the recipient details and the attachment names.

In at least some embodiments, the first message attachment 303 is the metadata attachment file, comprising information about the encryption scheme used to encrypt the other attachments of the encrypted email. In an exemplary embodiment, the metadata attachment may comprise information relating to at least one of the following: the metadata, the recipient, the sender, the message, the attachments. Said information may be organized into data structures comprised of any of the fields within the following exemplary tables:

**Table 1. Metadata attachment fields for metadata information.**

| **Data structure** | **Field name** | **Type** | **Data definition** |
|---|---|---|---|
| Metadata information | drmVersion | string | Version of encryption scheme. Used by applications to determine what encryption has been used. |
| Metadata information | attachmentCount | string | Number of attachments including the message. |

**Table 2. Metadata attachment fields for sender information.**

| **Data structure** | **Field name** | **Type** | **Data definition** |
|---|---|---|---|
| Sender information | address | string | Email address of sender |
| Sender information | domain | string | Domain managing the key pair, for key management purposes. |
| Sender information | keyID | Base-64 | The key pair identifier corresponding to the key pair used by the sender to generate the shared secret. |
| Sender information | symmetricKey | Base-64 | The email encryption key in encrypted form (encrypted using sender's shared secret and sender's initialization vector). Used so that the sender may later unencrypt the message. |
| Sender information | symmetricIV | Base-64 | The sender's initialization vector used to encrypt the email encryption key. |

**Table 3. Metadata attachment fields for recipient information.**

| **Data structure** | **Field name** | **Type** | **Data definition** |
|---|---|---|---|
| Recipient information | address | string or key | Email address of Recipient |
| Recipient information | domain | string | Domain managing the recipient's key pair, for key management purposes. |
| Recipient information | keyID | Base-64 | The key pair identifier of the recipient corresponding to the key pair used by the sender to generate the shared secret (i.e the recipient's public key). |
| Recipient information | symmetricKey | Base-64 | The email encryption key in encrypted form (encrypted using sender/recipient shared secret and initialization vector). |
| Recipient information | symmetricIV | Base-64 | The initialization vector used to encrypt the email encryption key. |

**Table 4. Metadata attachment fields for message information.**

| Data structure | Field name | Type | Data definition |
|---|---|---|---|
| message information | subject | Base-64 | The message subject in encrypted form. |
| message information | subjectIV | Base-64 | The initialization vector used to encrypt the message subject. |
| message information | attachmentIV | Base-64 | The initialization vector used to encrypt the message body attachment. |

**Table 5. Metadata attachment fields for attachment information.**

| Data structure | Field name | Type | Data definition |
|---|---|---|---|
| attachment information | data | Base-64 | Encrypted file metadata, i.e. the metadata of the encrypted attachment file in encrypted form. |
| attachment information | dataIV | Base-64 | The initialization vector used to encrypt the file metadata of the attachment. |
| attachment information | attachmentIV | Base-64 | The initialization vector used to encrypt the attachment file. |

Multiple copies of the above-mentioned data structures are generated independently as required, i.e. if there are three recipients, three separate recipient data structures will be generated, one for the information of each recipient. Further, if there are two attachments in the unencrypted email, two separate attachment data structures will be generated, one for the information of each attachment. In the above data structures, Base-64 refers to a binary-to-text encoding scheme which represents binary data in ASCII, American Standard Code for Information Interchange, string format by translating it into a radix-64 representation.

The above-mentioned data structures may be represented and included in the metadata attachment file using any suitable computer programming code. For example, in JSON, JavaScript Object Notation, the "sender" portion of the metadata attachment file would be in the following exemplary form:

```
           "sender":{
                       "address":"foo@bar",
                       "domain":"foobar",
                       "keyId": "b3ZdzKeM",
                       "symmetricIV":"uvbl5+19E+DEzBCg",
                       "symmetricKey":"cAhYLXMelPoFcIhvyZN/HwimMRhxfs
           zz3+EMR8n6IBkn0AuisgQcUiPliU5/qZkV"} }
```

Moving then to the second message attachment 304, this attachment file comprises the email message body in encrypted form.

The third attachment file 305 comprises, in encrypted form, the first attachment of the email message. For example, if the user has attached an image file to his original email, the image file would be then be encrypted and presented as the third attachment file, as the first attachment file is the metadata attachment file and the second attachment file is the encrypted email message body. If the email message comprises further attachments, they will be the fourth, fifth, sixth, etc. attachments, respectively. In cases wherein the original email does not comprise attachments, no third attachment file will be generated and the metadata file will typically not comprise data structures relating to the attachments.

The attachment information data structure in the above mentioned Table 5 may also be encrypted, comprising e.g. the file type (for the eventual saving the decrypted file), the file name and any other relevant file details.

Encrypted email 300 is sendable and receivable via standard email servers and applications, including those compliant with the email standards disclosed within this disclosure.

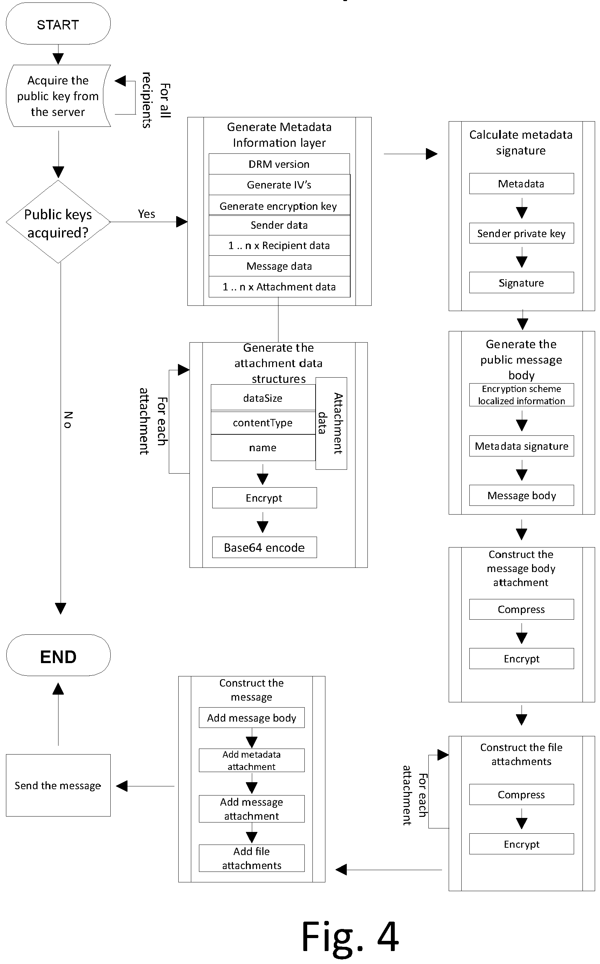

FIGURE 4 illustrates an exemplary embodiment supported by at least some of the embodiments disclosed herein. Figure 4 details a similar embodiment as the other figures, wherein the public keys for each intended recipient are first obtained from a key management server. After that an encryption key is generated and added into a metadata attachment (also known as the metadata information layer). Further steps to be performed in this embodiment include generating the attachment data structures, calculating the metadata signature, generating the public message body, constructing the file attachments and constructing the encrypted email message as well as sending the message.

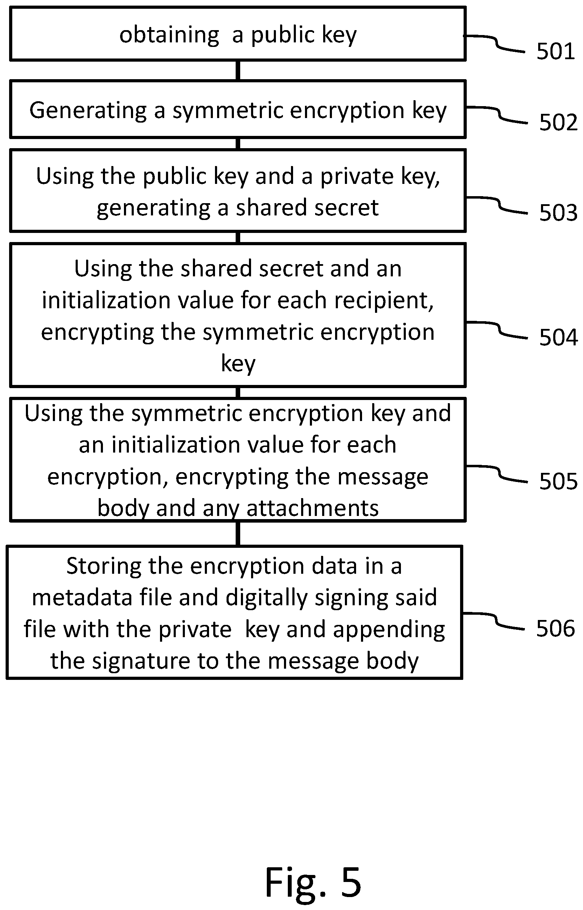

FIGURE 5 illustrates an exemplary further method supported by at least some of the embodiments disclosed herein. Said method comprises at least steps 501, 502, 503, 504, 505, 506, and 507. In step 501, a public key is obtained, wherein the public key may correspond to at least one recipient email address. The public key may be acquired from a server or from the local memory of a computing device, for example.

In step 502, a symmetric encryption key is generated. Said key may be usable with at least one of: AES-GCM, AES-GCM-SIV (in accordance with RFC 8452), AES-CBC (Cipher Block Chaining). In step 503, using the obtained public key and a private key, a shared secret is generated. For example, the public key may correspond to the intended recipient and the private key may be the sender's private key or a key corresponding to the sender's computing equipment or location.

In step 504, using the shared secret and a different initialization value for each recipient, the symmetric encryption key generated in step 502 is encrypted using any suitable encryption methods, preferably a symmetric encryption method. In step 505, the symmetric encryption key generated in step 502 is used with a different initialization value for each encryption to encrypt the message body and any attachments, again using any suitable using any suitable encryption methods, preferably a symmetric encryption method.

In step 506, the encryption information is stored in a metadata file. The encryption information may comprise: key identifiers, key domains, initialization vectors. Encrypted data such as the encrypted symmetric key may also be stored in the metadata file. After the storing, the metadata file is digitally signed with the private key using any suitable signing method. Finally, the signature is appended to the public message body. Upon completion of the method, an encrypted email is generated in accordance with any of the embodiments disclosed herein.

In at least some of the embodiments disclosed herein, a determination is performed to determine that an at least one recipient of the email has a public key usable by the methods disclosed herein. The determination may be performed as a secured query from a first computer program application to a second computer program application, where the first application may be running on a first computing unit in a first location, for example a personal computer, PC, and wherein the second application may be running on a second computing unit in a second location, for example a server. In the event that the determination is positive, the encryption process may continue. In the event that the determination is negative, the encryption process may terminate or continue in a modified form, for example as disclosed in step 102.

A further embodiment of the methods presented herein comprises the use of a second apparatus, for example a computing apparatus, preferably a server, to at least perform, responsive to a query from a first apparatus, preferably a personal computer or mobile device, a determination if a given email address of an email recipient is within at least one database comprised in the memory of the second apparatus, and in the event of a positive result of the determination, to return to the first apparatus, for example within a secured message, at least one public key and key identifier corresponding to the given email address of the email recipient. In a further embodiment, an apparatus may be configured so that it performs both as the first apparatus and second apparatus as detailed above, and if the email recipient is not found within the database, transmits a query to at least one third apparatus, the query comprising if a given email address of an email recipient is within at least one database comprised in the memory of the third apparatus.

In a further embodiment of the methods presented herein, the control fields such as the recipient address are inside the Metadata Information Layer and the remaining attachments contain the actual message attachments as compressed and encrypted with the keys and other cryptographic parameters defined by the Metadata Information Layer. Compression functions may be performed before encrypting the content.

A further embodiment of the methods presented herein comprises the use of a compression function for the plaintext unencrypted elements, as shown in multiple places in figure 4. Use of such a function reduces the data transmission capacity required to transmit the encrypted email, as the encrypted email will be smaller in size. Suitable compression algorithms include but are not limited to gzip.

A further embodiment of the methods presented herein comprises the use of a key derivation function, for example a scrypt function as laid out in RFC 7914, to further protect the shared secrets generated during encryption processes. Use of such a function adds security to the encryption method and especially protects past and future messages from decryption, as an attacker who derives the encryption key used to encrypt the symmetric key for a specific message will not be able to derive the shared secret or the user's private key. The key derivation function may be used on the generated shared secret before the data is encrypted, e.g. in or before steps 105 and 225.

A further embodiment of the methods presented herein comprises the combination of the attachment files, namely the metadata attachment file, the encrypted message and any further attachment files into a single attachment file. Such an embodiment is beneficial for at least the reason that fewer files need to be handled by the mail server. This combination file may also be digitally signed using the sender's private key, wherein the signature may be placed in the public email message body.

Benefits of the solutions disclosed herein include at least the following:
- The use of elliptic curve cryptography results in comparably smaller key sizes and increased security, as laid out above.
- The use of the digital signature procedure allows the recipient to check that the encryption metadata has not been tampered with and that the sender identity is not falsified, as also laid out above.
- The use of the encryption metadata file allows the cryptographic system to be updated and altered, as the details such as the version number are retained in tamper-proof format in the metadata file.
- The use of the encryption metadata file also ensures that the solutions presently disclosed are compliant with standard email systems, as discussed above, and will be properly handled as such.
- The message subject line is also encrypted as is the file name and type of the attachments, which reduces the information available to any potential attacker.

With respect to the computing apparatus used with the encryption methods disclosed herein, one type of computing apparatus may comprise, for example, at least one computing device such a server, node or cloud computing device. Comprised in the computing device is a processor, which may comprise, for example, a single- or multi-core processor wherein a single-core processor comprises one processing core and a multi-core processor comprises more than one processing core. The processor may comprise more than one processor. A processing core may comprise, for example, a Cortex-A8 processing core by ARM Holdings or a Steamroller processing core produced by Advanced Micro Devices Corporation. The processor may comprise at least one Qualcomm Snapdragon and/or Intel Core processor, for example. The processor may comprise at least one application-specific integrated circuit, ASIC. The processor may comprise at least one field-programmable gate array, FPGA. The processor may be a means for performing method steps in the computing device. The processor may be configured, at least in part by computer instructions, to perform actions. The computing apparatus may comprise at least one of the following: a personal computer, a server, a mobile phone, a smartphone, a tablet device, a smart watch, an item of smart jewellery or any type of suitable electronic device.

Network technologies may be used to connect computing devices to one another and to transmit information such as email and encryption keys between devices. In the context of this disclosure, usable network technologies comprise at least: wireless local area network, WLAN, Ethernet, universal serial bus, USB, and/or worldwide interoperability for microwave access, WiMAX, standards, and satellite communication methods, direct wiring such as electrical wires, for example. Alternatively or additionally, a proprietary communication framework may be utilized.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In this description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

The solutions of the present disclosure may also be utilized via any of the following clauses:
Clause 1. A method for encrypting email messages, the method comprising using a computer program application to:
   - determine at least one recipient of an email message comprising recipient email address and a message body and,
   - obtain a public key corresponding to said at least one recipient from a server,
   - generate a symmetric encryption key,
   - generate initialization vectors for the sender and each recipient as well for the email subject and the message body attachment,
   - using a public - private key pair, generate a shared secret for the sender alone and a shared secret between the sender and each recipient,
   - for the sender alone and for each recipient, symmetrically encrypt the symmetric encryption key using the initialization vector and the corresponding shared secret,
   - using the symmetric encryption key and the corresponding initialization vector, encrypt the email subject,
   - generate an metadata attachment, said metadata attachment comprising:
      - sender information comprising address, domain, sender key pair identifer, encrypted symmetric encryption key and the corresponding initialization vector,
      - recipient information comprising address, domain, recipient key pair identifier, encrypted symmetric encryption key and the corresponding initialization vector,
      - message information comprising encrypted email subject corresponding initialization vector, message body attachment encryption initialization vector, and
   - sign the metadata attachment using the private key of the sender, and
   - using said symmetric encryption key, generate an encrypted message body attachment comprising the message body in encrypted form, and
      - generate the encrypted email message, said encrypted email message comprising:
         - a public message header comprising at least one recipient address,
         - the signed metadata attachment,
         - the encrypted message body attachment, and
         - a public message body, wherein the public message body comprises a message indicating that the actual content is secured and the signature of the metadata attachment.
Clause 2. The method of any preceding clause, wherein the method further comprises:
   - generating at least one encrypted attachment file from at least one unencrypted attachment file,
   and wherein the encrypted email message further comprises the at least one encrypted attachment file and the public message body further comprises the at least one encrypted attachment file signature.
Clause 3. The method of any preceding clause, wherein a different initialization vector is generated and used for the sender and each recipient as well for the email subject and the message body attachment and any attachment files.
Clause 4. A non-transitory computer readable medium having stored thereon a set of computer readable instructions that, when executed by at least one processor, cause an apparatus to at least:
   - perform the methods of any preceding clause.
Clause 5. A computer program configured to cause a method in accordance with at least one of clauses 1 - 3 to be performed.

### INDUSTRIAL APPLICABILITY

At least some embodiments of the present invention find industrial application in securing electronic communications such as electronic mail.

### ACRONYMS LIST

- AES: Advanced encryption standard
- AES-GCM: Advanced encryption standard Galois/Counter Mode
- ASCII: American Standard Code for Information Interchange
- ECC: Elliptic curve cryptography
- ECDH: Elliptic-curve Diffie-Hellman
- ECDLP: Elliptic curve discrete logarithm problem
- ECDSA: Elliptic Curve Digital Signature Algorithm
- GNU: Gnu is not Unix, an operating system
- gzip: GNU zip
- HTTP: Hypertext transfer protocol
- IETF: Internet Engineering Task Force
- IV: Initialization vector
- NIST: National Institute of Standards and Technology
- RFC: Request for comments, standards published by the IETF
- RSA: Rivest-Shamir-Adleman
- SMTP: Simple mail transfer protocol

**REFERENCE SIGNS LIST**

| | |
|---|---|
| 101 - 106 | Steps of method |
| 201 | Plain text of email message |
| 202 | recipient's public key |
| 203 | sender's public key |
| 204 | sender's private key |
| 221 | compression of plain text |
| 222 | generation of encryption key |
| 223 | encryption of compressed plain text |
| 224 | creation of shared secret using a private and public key |
| 225 | encrypting the encryption key using a shared secret and initialization vector |
| 226 | generating digital signature of at least portion of email |
| 210 | encrypted plain text also known as secured message body attachment |
| 212 | metadata attachment |
| 214 | generated digital signature |
| 300 | encrypted email |
| 301 | public message header |
| 302 | public message body, also known as visible message body |
| 303 | first message attachment also known as the metadata attachment file |
| 304 | second message attachment also known as email message body in encrypted form |
| 305 | third attachment file also known as encrypted first attachment |
| 501 - 506 | steps of method |

## Claims

1. A method for encrypting email messages, the method comprising using a computer program application to:
- generate a symmetric encryption key,
- generate a shared secret corresponding to the recipient and a sender for each recipient using a public key of at least one recipient email address as well as a private key of the sender of the email message,
- for each recipient, symmetrically encrypt the symmetric encryption key using a recipient initialization vector and the generated shared secret corresponding to that recipient and the sender,
- generate a metadata attachment comprising recipient information related to the at least one recipient,
- generate a digital signature of the metadata attachment using the private key of the sender,
- using the symmetric encryption key and a message body initialization vector, generate an encrypted message body attachment comprising the message body in encrypted form, and
- generate the encrypted email message, said encrypted email comprising
- a public message header comprising the at least one recipient address,
- the metadata attachment,
- the encrypted message body attachment, and
- a public message body comprising at least the signature of the metadata attachment.

2. The method of claim 1, wherein the method further comprises wherein the information related to the recipient comprises the recipient's email address, key management domain, recipient key pair identifier, encrypted symmetric encryption key and the corresponding recipient initialization vector.

3. The method of any preceding claim, wherein the method further comprises:
- generating at least one encrypted attachment file from at least one unencrypted attachment file,
and wherein the encrypted email message further comprises the at least one encrypted attachment file and the public message body further comprises the at least one encrypted attachment file signature.

4. The method of any preceding claim, wherein the method further comprises:
- using the sender's private key and the sender's public key to generate a shared secret for the sender alone, and
- symmetrically encrypting the symmetric encryption key using a initialization vector and the generated shared secret corresponding to the sender's private key and the sender's public key,
- including the sender information in the metadata attachment.

5. The method of any preceding claim, wherein elliptic curve cryptography is used to generate the shared secrets.

6. The method of any preceding claim, wherein elliptic curve cryptography is used to generate the digital signature of the metadata attachment file.

7. The method of any preceding claim, wherein a key derivation function is used on any of the shared secrets when encrypting at least one of: the symmetric encryption key, the message body attachment.

8. The method of any preceding claim, wherein the metadata attachment comprises:
- sender information, said information comprising the sender's email adddress, key management domain, sender key pair identifer, the encrypted symmetric encryption key and the corresponding sender initialization vector.

9. The method of any preceding claim, wherein the email message includes a subject and wherein the metadata attachment comprises:
- the email subject which has been encrypted using the symmetric encryption key,
- the initialization vector corresponding to the encrypted email subject, and
- the message body attachment encryption initialization vector.

10. An apparatus comprising at least one processing core, at least one memory including computer program code, the at least one memory and the computer program code being configured to, with the at least one processing core, cause the apparatus at least to perform a method in accordance with claims 1 - 9 using a first computer program application.

11. An apparatus in accordance with claim 10, wherein the apparatus is further caused to perform a determination if a given email address of an email recipient is within at least one database, and in the event of a positive result of the determination, to provide at least one public key and key identifier corresponding to the given email address of the email recipient.

12. A system comprised of a first apparatus in accordance with claim 10 and a second apparatus, wherein the second apparatus comprises at least one processing core and at least one memory including computer program code wherein the at least one memory and the computer program code are configured to, with the at least one processing core, cause the second apparatus to at least perform, responsive to a query from the first apparatus, a determination if a given email address of an email recipient is within at least one database, and in the event of a positive result of the determination, to return to the first apparatus at least one public key and key identifier corresponding to the given email address of the email recipient.

13. A computer program configured to cause a method in accordance with at least one of claims 1 - 9 to be performed.
